# EUROPEAN PATENT SPECIFICATION

(11) **EP 3 777 122 B1**
(45) Date of publication and mention of the grant of the patent: **04.10.2023**
(21) Application number: 19763143.5
(22) Date of filing: 21.08.2019
(51) Int. Cl.: G06V 10/25, H04N 23/60

(54) **IMAGE PROCESSING METHOD AND APPARATUS**
BILDVERARBEITUNGSVERFAHREN UND -VORRICHTUNG
APPAREIL ET PROCÉDÉ DE TRAITEMENT D'IMAGE

(30) Priority: 22.08.2018 CN 201810961701
(43) Date of publication of application: 17.02.2021
(73) Proprietor: Advanced New Technologies Co., Ltd., George Town, Grand Cayman KY1-9008 (KY)
(72) Inventor: GUO, Xin, Hangzhou, Zhejiang 311121 (CN); CHENG, Yuan, Hangzhou, Zhejiang 311121 (CN); JIANG, Chen, Hangzhou, Zhejiang 311121 (CN); LU, Zhihong, Hangzhou, Zhejiang 311121 (CN)
(74) Representative: Goddar, Heinz J.
(86) International application number: PCT/US2019/047389
(87) International publication number: WO 2020/041399

(56) References cited:
- WO-A1-2018/036276
- CN-A- 107 194 323
- CN-A- 107 368 776
- CN-A- 107 403 424
- CN-A- 107 909 113
- US-A1- 2018 096 497
- US-B1- 9 654 679

## Description

### Cross-Reference To Related Application

This present application is based upon and claims priority to Chinese Application No. 201810961701.X, filed on August 22, 2018.

### Technical Field

Embodiments of this specification relate to the field of image processing technologies, and in particular, to an image processing method and apparatus for guiding a user to take vehicle damage assessment photos.

### Technical Background

In conventional auto insurance claim settlement scenarios, insurance companies need to send professional survey and damage assessment personnel to an accident site to conduct on-site survey and damage assessment, provide a vehicle repair plan and a compensation amount, take on-site photos, and keep the damage assessment photos on file for verifiers to verify the damage and cost. As the survey and damage assessment need to be conducted manually, insurance companies need a large investment for labor costs and professional knowledge training costs. In terms of the experience of ordinary users, as the users need to wait for a manual surveyor to take photos on site, a damage assessor to assess damage on the repair site, and a damage verifier to verify the damage at the background during the claim settlement process, the claim settlement cycle is relatively long.

With the development of the Internet, a claim settlement solution has emerged, in which a user takes vehicle damage photos on site and uploads the photos to a server, so that damage assessment and claim settlement are performed based on the vehicle damage photos according to an algorithm or manually. However, in the solution, there are usually some requirements on the vehicle damage photos taken. For example, the user is usually required to take vehicle damage photos from far to near. In addition, there are also some requirements on the sharpness, brightness and shooting angle of the photos. With respect to such requirements, in the prior art, customer service personnel of an insurance company need to remotely guide a user to take photos for damage assessment by telephone, network or other means.

Therefore, a more effective solution for guiding users to take photos for vehicle damage assessment is needed.

CN 107 909 113 A discloses a traffic accident image processing method and device and a storage medium. The method, which is applied to a terminal, includes the following steps: acquiring a traffic accident image to be classified; inputting the traffic accident image to an image classification network model to classify the traffic accident image; and determining the division of traffic accident liability according to the classification result, wherein the image classification network model includes convolution layers, and at least one of the convolution layers is a deformable convolution layer.

CN 107 194 323 A discloses a vehicle loss assessment image obtaining method and apparatus, a server and a terminal device. A client obtains shooting video data and sends the shooting video data to the server; the server detects video images in the shooting video data and identifies damaged parts in the video images; the server classifies the video images based on the detected damaged parts and determines a candidate image classification set of the damaged parts; and vehicle loss assessment images are selected out from the candidate image classification set according to preset screening conditions. By utilizing the method and the apparatus, high-quality loss assessment images meeting loss assessment processing demands can be automatically and quickly generated; the loss assessment processing demands are met; and the loss assessment image obtaining efficiency is improved.

CN 107 368 776 A discloses a method, apparatus, server and terminal device for obtaining a vehicle loss assessment image. The method may include: receiving video data of a damaged vehicle and information of a damaged portion of the damaged vehicle; extracting one or more video images from the video data; classifying the one or more video images into one or more candidate image classification sets of the damaged portion based on the information of the damaged portion; and selecting a vehicle loss assessment image from the one or more candidate image classification sets according to a screening condition.

US2020058075 teaches a car damage assessment system, where the user takes a photo and marks a region of the image corresponding to the damaged part, which is sent to the server for analysis. The server can prompt the user to adjust the image pickup conditions if the image quality is insufficient.

### Summary of the Invention

The present invention is defined by the appended claims. The embodiments of this specification are aimed at providing a more effective image processing method and apparatus to resolve the shortcomings in the prior art.

In order to achieve the foregoing objective, in one aspect, an image processing method is provided in this specification, the method being performed at a mobile device that includes a camera and comprising:
acquiring a video stream of an accident vehicle by the camera according to a user instruction;
obtaining an image of a current frame in the video stream;
determining whether the image meets a first predetermined criterion by inputting the image into a predetermined classification model, wherein the predetermined classification model includes a convolutional neural network for use in the mobile device and wherein the predetermined classification model classifies the image based on whether the image is blurred and/or whether a light intensity is sufficient;
adding a target box and/or target segmentation information to the image by inputting the image into a target detection and segmentation model when the image meets the predetermined criterion, wherein the target box and the target segmentation information both correspond to a vehicle damage of the vehicle, and the target detection and segmentation model includes a convolutional neural network for use in the mobile device; and
displaying the target box and/or the target segmentation information to the user,
prompting the user accordingly based on whether the result of the target detection and segmentation model is in line with a second predetermined criterion.

In an embodiment, the image processing method further comprises prompting the user correspondingly based on a classification result of the model when the image does not meet the predetermined criterion.

In an embodiment, in the image processing method, the predetermined classification model classifies the image based on at least one of the following conditions: whether the image is blurred, whether the image includes vehicle damage, whether the light intensity is sufficient, whether the shooting angle is skewed, and whether the shooting distance is appropriate.

In an embodiment, the image processing method further comprises presenting a shooting flow to the user before the video stream of the accident vehicle is acquired by the camera.

In an embodiment, in the image processing method, the prompting the user accordingly based on whether the result of the target detection and segmentation model is in line with the second predetermined criterion comprises prompting the user to move forward or backward based on the target box and/or the target segmentation information when the result of the target detection and segmentation model is not in line with the second predetermined criterion.

. In an embodiment, in the image processing method, the prompting the user accordingly based on whether the result of the target detection and segmentation model is in line with the second predetermined criterion comprises prompting the user to shoot based on the target box and/or the target segmentation information to obtain a damage assessment photo corresponding to the image of the current frame when the result of the target detection and segmentation model is in
line with the second predetermined criterion.

In an embodiment, the image processing method further comprises uploading the damage assessment photo to a server after the damage assessment photo corresponding to the image of the current frame is obtained.

In an embodiment, the image processing method further comprises obtaining an association between the image of the current frame and a first image based on the video stream after the damage assessment photo corresponding to the image of the current frame is obtained, wherein the first image is an image, shot by the user, of a frame before the current frame in the video stream.

In an embodiment, in the image processing method, the association includes at least one of the following relations between the image of the current frame and the first image: an optical flow, a mapping matrix, and a position and angle transformation relation.

In an embodiment, the image processing method further comprises uploading the association to a server after the association between the image of the current frame and the first image is obtained.

In an embodiment, in the image processing method, the predetermined classification model and the target detection and segmentation model include a shared convolutional neural network for use in the mobile device.

In another aspect, a computing device is provided in this specification, comprising a memory and a processor, wherein executable codes are stored in the memory, and when the processor executes the executable codes, any image processing method descried above is implemented.

In the image processing solution according to the embodiments of this specification, blurred images, images obtained under poor light intensity, non-vehicle damage pictures and other images in an actual video stream can be effectively filtered out through an image classification algorithm with low computational load, thus helping users confirm which images are available. An image detection and segmentation algorithm can help users learn which images are recognizable to the algorithm and give a forward or backward prompt to finally achieve actual availability. At the same time, an association between the photos taken by users is calculated through multiple algorithms by using characteristics of the video stream, thus providing more abundant and reliable information to a background algorithm engine and achieving more accurate and robust effects.

### Brief Description of the Drawings

The embodiments of this specification can be clearer when described with reference to the accompanying drawings.
FIG. 1 shows a schematic diagram of an image processing system 100 according to an embodiment of this specification;
FIG. 2 shows a flowchart of an image processing method according to an embodiment of this specification;
FIG. 3 shows a schematic diagram of a text prompt on a screen of a mobile phone according to a model classification result;
FIG. 4 schematically shows an effect diagram of the target box and/or target segmentation information displayed on the screen;
FIG. 5 shows a mapping effect of a mapping matrix; and
FIG. 6 shows an image processing apparatus 600 according to an embodiment of this specification.

### Detailed Description

The embodiments of this specification are described in the following with reference to the accompanying drawings.

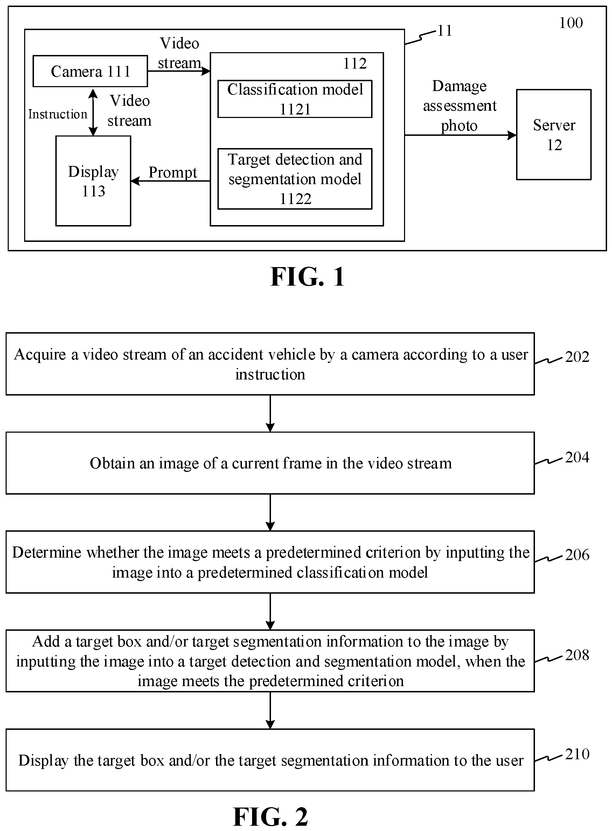

FIG. 1 shows a schematic diagram of an image processing system 100 according to an embodiment of this specification. As shown in FIG. 1, the system 100 includes a mobile device 11 and a server 12. The mobile device 11 is, for example, a mobile phone, a smart device capable of communication, or the like. The server 12 is, for example, a server used by an insurance company to process damage assessment photos. The mobile device 11 includes a camera 111 and a display 113. In addition, the mobile device 11 is provided with a mobile terminal algorithm model 112. The algorithm model 112 includes a classification model 1121 and a target detection and segmentation model 1122. The system is used to guide a user to take damage assessment photos of a vehicle and upload them to the server for processing. For example, in the scene of a vehicle accident, a damage assessor of an insurance company is not required to arrive at the scene, but a vehicle owner in the accident only needs to use the mobile device 11 to take photos according to tips of an APP for claim settlement, and then qualified damage assessment photos can be obtained and uploaded to the server 12.

In the process of shooting, first of all, the user opens a shooting interface in the APP for auto insurance claim settlement (i.e. issuing an instruction to the camera) through, for example, a button on the display 113 (e.g., a touch screen). On the shooting interface, the APP invokes the camera 111 to acquire a video stream, inputs the video stream into the algorithm model 112 for processing, and displays the video stream on the display 113 at the same time. The algorithm model 112 includes a classification model 1121 and a target detection and segmentation model 1122. The classification model 1121 is used to perform basic classification on input image frames, for example, whether the image frames are blurred and whether the light intensity is sufficient. The target detection and segmentation model 1122 is used to add a target box and/or segmentation information to the input image frames. The segmentation information shows target pixel-level segmentation results. After a current frame in the video stream is input into the algorithm model 112, an image of the current frame is first classified by the classification model 1121. Based on a classification result, a prompt is shown on the display 113 to prompt the user to perform a corresponding operation, such as stabilizing the camera. When the classification result of the classification model 1121 for the image of the current frame is in line with a predetermined criterion, a target box and/or segmentation information are/is added to the image by the target detection and segmentation model 1122. At the same time, the target box and/or the segmentation information are/is displayed on the frame of image shown on the display 113, and the user is prompted accordingly. For example, the user is prompted to move forward or backward. When the result of the target detection and segmentation model 1122 is in line with the predetermined criterion, a prompt is shown in the display 113 to prompt the user to take photos. The user clicks a shoot button on the display 113 to take photos, thereby obtaining qualified damage assessment photos. When the user finishes shooting, all the damage assessment photos taken will be uploaded to the server 12. In the server 12, the damage assessment photos uploaded by the user are processed through a trained damage assessment algorithm model, thereby obtaining a damage assessment result.

The structure of the system 100 shown in FIG. 1 is merely schematic, and the system according to the embodiment of this specification is not limited to the structure shown in FIG. 1. For example, the display can be a non-touch screen, and the damage assessment result may not be obtained through an algorithm in the server 12 but manually determined based on the damage assessment photos. In addition, the algorithm model 112 can also include various algorithms for obtaining an association between frames in the video stream to obtain an association between multiple damage assessment photos taken.

FIG. 2 shows a flowchart of an image processing method according to an embodiment of this specification. The method is performed at a mobile device that includes a camera. The method includes the following steps.

In step S202, a video stream of an accident vehicle is acquired by the camera according to a user instruction.

In step S204, an image of a current frame in the video stream is obtained.

In step S206, it is determined whether the image meets a predetermined criterion by inputting the image into a predetermined classification model, wherein the predetermined classification model includes a convolutional neural network for use in the mobile device.

In step S208, when the image meets the predetermined criterion, a target box and/or target segmentation information are/is added to the image by inputting the image into a target detection and segmentation model, wherein the target box and the target segmentation information both correspond to at least one of a vehicle part and vehicle damage of the vehicle, and the target detection and segmentation model includes a convolutional neural network for use in the mobile device.

In step S210, the target box and/or the target segmentation information are/is displayed to the user.

First of all, in step S202, a video stream of an accident vehicle is acquired by the camera according to a user instruction. As described above, the mobile device is, for example, a mobile phone. For example, a user can take damage assessment photos of the accident vehicle by using an auto insurance claim settlement APP installed on his/her mobile phone. For example, the user opens a shooting interface through a camera icon in the APP and aims the camera at the accident vehicle at the same time. After the shooting interface is opened, similar to the shooting interface of the camera of the mobile phone, images acquired by the camera as well as a button for taking photos are displayed on the screen of the mobile phone. The images continuously acquired by the camera form a video stream. When the video stream is displayed on the screen of the mobile phone by the APP as described above, the video stream is also real-time input into various algorithm models deployed in the APP on the mobile phone. The camera can be configured to acquire one frame of image at a predetermined interval (for example, 125 ms) to reserve an operation time of the algorithm model.

In an embodiment, after the user enters the shooting interface, the APP first presents a general shooting flow to the user on the screen to help the user understand steps of the whole flow, and then displays the video stream acquired by the camera on the screen. For example, several processes can be demonstrated in the form of pictures, text, sounds, and the like: operating according to a prompt of the APP, taking photos according to a prompt of the APP, uploading the photos, and so on.

In step S204, an image of a current frame in the video stream is obtained. The current frame in the video stream is an image currently acquired by the camera, that is, an image currently displayed on the screen of the mobile phone. After acquiring the video stream of the vehicle by the camera, the APP can determine frames in the video stream that can be input into the model according to the model processing time. For example, each frame of image in the video stream can be obtained for model analysis, or one frame of image can be obtained every few frames in the video stream to be input into the model for analysis.

In step S206, it is determined whether the image meets a predetermined criterion by inputting the image into a predetermined classification model, wherein the predetermined classification model includes a convolutional neural network for use in the mobile device.

As described above with reference to FIG. 1, a lightweight image classification model can be deployed on the mobile phone for fast local processing of vehicle images in the video stream. For example, the predetermined classification model is a multi-task classification model trained by using a mobile model including a convolutional neural network, e.g., MobileNet v2, ShuffleNet, or SqueezeNet. For example, the classification model can be trained by using a large number of tagged vehicle damage photos, wherein the vehicle damage photo can include multiple tags related to whether the photo is blurred, whether the photo includes vehicle damage, whether the light intensity is sufficient, whether the shooting angle is skewed, whether the shooting distance is appropriate, etc., in order to carry out multi-task learning. In the above mobile model such as MobileNet v2, by optimizing a conventional two-dimensional convolution network, model parameters can be effectively reduced and the operation efficiency can be improved, so that such an algorithm can be deployed in the mobile terminal. The optimization includes, for example, superposing multiple small convolution kernels to achieve the same effect as a large convolution kernel so that parameters used are reduced exponentially; replacing general two-dimensional convolution operations with depth-wise separable convolution to reduce the number of the parameters, and so on.

The trained classification model as described above can, for example, classify the image based on at least one of the following conditions: whether the image is blurred, whether the image includes vehicle damage, whether the light intensity is sufficient, whether the shooting angle is skewed (e.g., whether the shooting angle is a tilted angle such as a high angle or an oblique angle), whether the shooting distance is appropriate, and so on. Thus, it is analyzed based on the classification result of the classification model whether the image meets predetermined basic requirements on vehicle damage assessment photos. It can be appreciated that the image classification performed by the classification model is not limited to the above listed types, and corresponding classification can be added as required.

In the case where the image does not meet the predetermined criterion, the APP can prompt the user correspondingly based on the classification result of the model.

For example, when the classification model judges that the image is blurred, the user can be provided with the following prompt: the image is blurred; please stabilize the camera. When the classification model judges that the image does not include vehicle damage, the user can be prompted to aim the camera at the damage location. When the classification model judges that the image is not obtained under enough light intensity, the user can be prompted that the light intensity is not enough. When the classification model judges that the shooting angle of the image is excessively skewed, the user can be prompted to take a photo facing the damage location. When the shooting distance is too far, the user can be prompted to approach the vehicle, and so on.

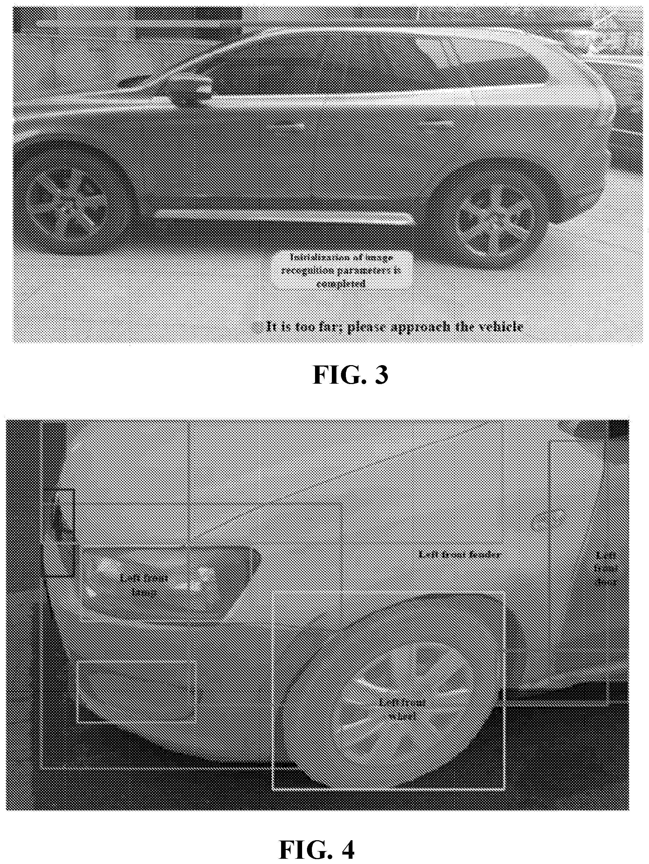

The above prompt may be in the form of a text prompt displayed on the screen, or in a voice form, or it is possible to give a prompt by displaying a text and playing a corresponding voice at the same time. FIG. 3 shows a schematic diagram of a text prompt on a screen of a mobile phone according to a model classification result. As shown in FIG. 3, after the shooting interface is opened, it is obtained by detection of the classification model that the shooting distance of the image of the current frame is far. Based on the detection result, the prompt "It is too far; please approach the vehicle" is displayed at the bottom of the screen.

In step S208, when the image meets the predetermined criterion, a target box and/or target segmentation information are/is added to the image by inputting the image into a target detection and segmentation model, wherein the target box and the target segmentation information both correspond to at least one of a vehicle part and vehicle damage of the vehicle, and the target detection and segmentation model includes a convolutional neural network for use in the mobile device.

As described above with reference to FIG. 1, a target detection and segmentation model can be deployed on the mobile phone to detect a part and damage of the vehicle in the video stream on the mobile phone, and display the target box and the target segmentation information on the screen of the mobile phone. The target detection and segmentation model is a lightweight convolutional neural network model for use in a mobile terminal, which can be implemented by, for example, MobileNet v2+SSDLite, or MobileNet v2+DeepLab v3, MaskRCNN, etc. In an embodiment, the target detection and segmentation model and the classification model include a shared underlying convolutional neural network. In an embodiment, the target detection and segmentation model can be obtained by training with a large number of labeled (with a target box or segmentation information) vehicle damage images. In the training sample, parts or damage areas of vehicles are labeled to train the target detection and segmentation model for vehicle parts and vehicle damage.

After the above image meets the basic criterion of the above vehicle damage assessment photos, by inputting the image into, for example, the trained target detection and segmentation model as described above, the target detection and segmentation model can automatically detect vehicle parts and/or vehicle damage in the image, and add the target box and/or the target segmentation information to a target position.

In step S210, the target box and/or the target segmentation information are/is displayed to the user.

After the target box and/or the target segmentation information are/is added to the image in the model, the target box and/or the target segmentation information can be displayed, through the screen of the mobile phone, on the currently displayed image. For example, target boxes of different parts (or different damage) can be displayed in different colors, and different parts (or different damage) can be displayed in different colors to show segmentation information of the different parts (or different damage). FIG. 4 schematically shows an effect diagram of the target box and/or target segmentation information displayed on the screen. As shown in FIG. 4, different gray scales represent different colors, for example, target boxes in different colors are added to the left front wheel and the left front lamp respectively. For another example, the left front fender and the left front door are respectively filled with different colors (the different colors are the target segmentation information). In the embodiment of this specification, target detection and target segmentation can be carried out for each vehicle part (or damage) at the same time; for another example, target detection can be carried out for each vehicle part, target segmentation can be carried out for each damage, etc., in order to distinguish the parts and damage during display.

The target detection and segmentation model of the mobile phone is used to directly detect, on the mobile phone, vehicle damage and parts in the image of the current frame, and visualize them on the screen of the mobile phone to help the user establish intuitive feelings, and know a rough detection result that the currently taken photo is going to have on the server side, images from which part information can be obtained accurately according to an algorithm, and images from which damage information can be obtained accurately according to the algorithm. According to the target box and the target segmentation information displayed on the screen, the user can appropriately adjust the shooting. For example, the user can move the position of the mobile phone so that the target box corresponding to the damage is displayed on the screen, thereby shooting damage assessment photos.

In an embodiment, after the target box and/or the target segmentation information are/is added to the image, the user is prompted correspondingly based on the target box and/or the target segmentation information. For example, the user is prompted to move forward or backward based on whether the image includes the target box and/or the target segmentation information of the damage, as well as the detected parts, the amount of damage and other information. When the APP determines, based on a processing result of the target detection and segmentation model for the image, that the image meets predetermined requirements on damage assessment photos, the user can be prompted to take a photo. Thus, by clicking the shoot button on the shooting interface, the user can obtain a vehicle damage assessment photo corresponding to the image of the current frame. After the user clicks the shoot button, the APP can save the damage assessment photo taken by the user into a phone album of the mobile phone or into the APP. After obtaining the damage assessment photo, the APP can upload the damage assessment photo to the server automatically or upload the photo to the server based on an operation of the user. On the shooting interface, the user can move the mobile phone to aim at multiple damage positions on the vehicle and take photos multiple times based on the tips of the APP as mentioned above to obtain multiple damage assessment photos. The APP can upload the multiple damage assessment photos together after the user shoots all the damage assessment photos or upload a single damage assessment photo each time the damage assessment photo is shot.

In an embodiment, the method shown in FIG. 2 further includes obtaining an association between the image of the current frame and a first image based on the video stream after the damage assessment photo corresponding to the image of the current frame is obtained, wherein the first image is an image, shot by the user, of a frame before the current frame in the video stream. In other words, the APP can obtain, based on the video stream, an association between multiple damage assessment photos taken based on the video stream. As described above with reference to FIG. 1, various algorithms for obtaining the association can be deployed on the mobile phone.

As described above, the user can take photos multiple times on the shooting interface to obtain multiple damage assessment photos. As the video stream includes rich information, it can be used to establish an association among various damage assessment photos. For example, an association between the damage assessment photo corresponding to the image of the current frame and each damage assessment photo taken previously can be obtained.

In an embodiment, the association includes dynamic information between frames constructed according to multiple FlowNets. For example, a first damage assessment image (photo) corresponding to the image of the current frame is processed by FlowNet1, a second damage assessment image (for example, an image frame before the current frame) is processed by FlowNet2, and an optical flow between the first damage assessment image and the second damage assessment image can be obtained by merging the output of FlowNet1 and FlowNet2.

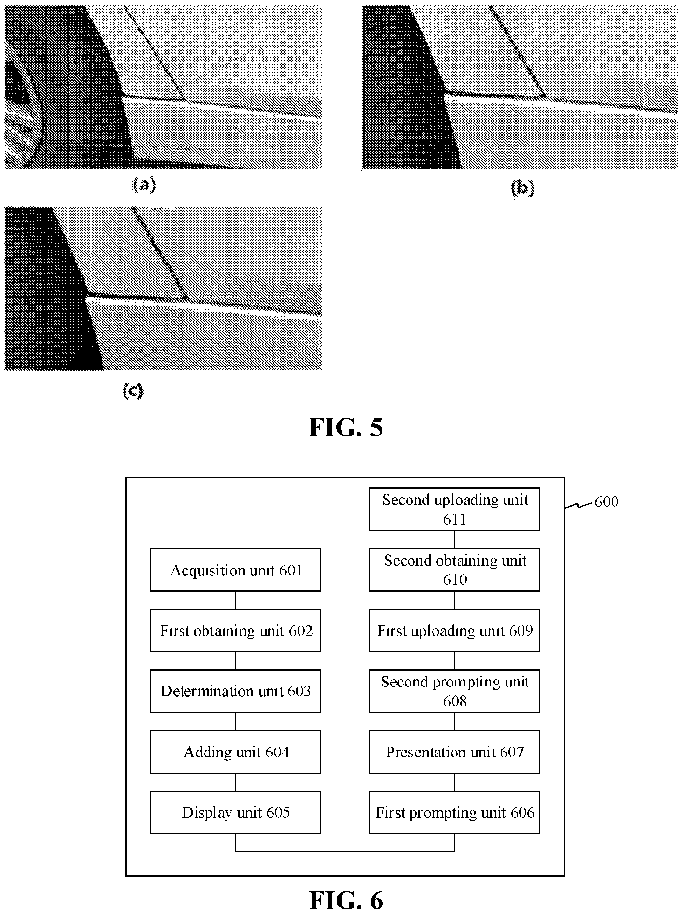

In an embodiment, the association includes a mapping matrix between frames. In an algorithm for obtaining the mapping matrix between frames, an image gradient and an image difference between an image 1 and an image 2 are first calculated, and then a mapping matrix between the image 1 and the image 2 is obtained through the least square optimization and Cholesky decomposition. For example, the image 1 and the image 2 are the first damage assessment image and the second damage assessment image. FIG. 5 shows a mapping effect of a mapping matrix. As shown in FIG. 5, (a) is the image 1, (c) is the image 2, (b) is an image 1' obtained by transforming the image 1 by using a mapping matrix, and the mapping matrix is a mapping matrix from the image 1 to the image 2. Thus, the image 1' transformed through the mapping matrix is basically consistent with the image 2.

In an embodiment, the association includes a shooting position and angle transformation relation between frames calculated by using a SLAM technology.

After the association between multiple damage assessment images (photos) taken is obtained as described above, the association can be uploaded to the server as relevant information. The server assesses damage based on the damage assessment images and the association between the damage assessment images, so that a more accurate and reliable damage assessment result can be obtained.

FIG. 6 shows an image processing apparatus 600 according to an embodiment of this specification. The apparatus is performed at a mobile device that includes a camera. The apparatus includes:
an acquisition unit 601 configured to acquire a video stream of an accident vehicle by the camera according to a user instruction;
a first obtaining unit 602 configured to obtain an image of a current frame in the video stream;
a determination unit 603 configured to determine whether the image meets a predetermined criterion by inputting the image into a predetermined classification model, wherein the predetermined classification model includes a convolutional neural network for use in the mobile device;
an adding unit 604 configured to add a target box and/or target segmentation information to the image by inputting the image into a target detection and segmentation model when the image meets the predetermined criterion, wherein the target box and the target segmentation information both correspond to at least one of vehicle parts and vehicle damage of the vehicle, and the target detection and segmentation model includes a convolutional neural network for use in the mobile device; and
a display unit 605 configured to display the target box and/or the target segmentation information to the user.

In an embodiment, the image processing apparatus 600 further includes a first prompting unit 606 configured to prompt the user correspondingly based on a classification result of the model when the image does not meet the predetermined criterion.

In an embodiment, the image processing apparatus 600 further includes a presentation unit 607 configured to present a shooting flow to the user before the video stream of the accident vehicle is acquired by the camera.

In an embodiment, the image processing apparatus 600 further includes a second prompting unit 608 configured to prompt the user correspondingly based on the target box and/or the target segmentation information after the target box and/or the target segmentation information are/is added.

In an embodiment, in the image processing apparatus 600, the second prompting unit 608 is further configured to prompt the user to move forward or backward based on the target box and/or the target segmentation information.

In an embodiment, in the image processing apparatus, the second prompting unit 608 is further configured to prompt the user to shoot based on the target box and/or the target segmentation information to obtain a damage assessment photo corresponding to the image of the current frame.

In an embodiment, the image processing apparatus 600 further includes a first uploading unit 609 configured to upload the damage assessment photo to a server after the damage assessment photo corresponding to the image of the current frame is obtained.

In an embodiment, the image processing apparatus 600 further includes a second obtaining unit 610 configured to obtain an association between the image of the current frame and a first image based on the video stream after the damage assessment photo corresponding to the image of the current frame is obtained, wherein the first image is an image, shot by the user, of a frame before the current frame in the video stream.

In an embodiment, the image processing apparatus further includes a second uploading unit 611 configured to upload the association to a server after the association between the image of the current frame and the first image is obtained.

In another aspect, a computing device is provided in this specification, including a memory and a processor, wherein executable codes are stored in the memory, and when the processor executes the executable codes, the image processing method according to any of the above items is implemented.

In the image processing solution according to the embodiments of this specification, blurred images, images obtained under poor light intensity, non-vehicle damage pictures and other images in an actual video stream can be effectively filtered out through an image classification algorithm with low computational load, thus helping users confirm which images are available. An image detection and segmentation algorithm can help users learn which images are recognizable to the algorithm and give a forward or backward prompt to finally achieve actual availability. At the same time, an association between the photos taken by users is calculated through multiple algorithms by using characteristics of the video stream, thus providing more abundant and reliable information to a background algorithm engine and achieving more accurate and robust effects.

## Claims

1. An image processing method, which is performed at a mobile device (11) that comprises a camera (111), the method comprising:
acquiring (202) a video stream of an accident vehicle by the camera (111) according to a user instruction;
obtaining (204) an image of a current frame in the video stream;
determining (206) whether the image meets a first predetermined criterion by inputting the image into a predetermined classification model (112, 1121, 1122), wherein the predetermined classification model comprises a convolutional neural network for use in the mobile device (11) and wherein the predetermined classification model classifies the image based on whether the image is blurred and/or whether a light intensity is sufficient;
adding (208) a target box and/or target segmentation information to the image by inputting the image into a target detection and segmentation model (112, 1121, 1122) when the image meets the first predetermined criterion, wherein the target box and the target segmentation information both correspond to a vehicle damage of the vehicle, and the target detection and segmentation model comprises a convolutional neural network for use in the mobile device (11);
displaying (210) the target box and/or the target segmentation information to the user; and
prompting the user accordingly based on whether the result of the target detection and segmentation model is in line with a second predetermined criterion.

2. The image processing method of claim 1, further comprising: prompting the user correspondingly based on a classification result of the model (112, 1121, 1122) when the image does not meet the first predetermined criterion.

3. The image processing method of claim 1, further comprising presenting a shooting flow to the user before the video stream of the accident vehicle is acquired by the camera (111).

4. The image processing method of claim 1, wherein the prompting the user accordingly based on whether the result of the target detection and segmentation model is in line with the second predetermined criterion comprises prompting the user to move forward or backward based on the target box and/or the target segmentation information when the result of the target detection and segmentation model is not in line with the second predetermined criterion.

5. The image processing method of claim 1, wherein the prompting the user accordingly based on whether the result of the target detection and segmentation model is in line with the second predetermined criterion comprises prompting the user to shoot based on the target box and/or the target segmentation information to obtain a damage assessment photo corresponding to the image of the current frame when the result of the target detection and segmentation model is in line with the second predetermined criterion.

6. The image processing method of claim 5, further comprising uploading the damage assessment photo to a server (12) after the damage assessment photo corresponding to the image of the current frame is obtained.

7. The image processing method of claim 5, further comprising obtaining an association between the image of the current frame and a first image based on the video stream after the damage assessment photo corresponding to the image of the current frame is obtained, wherein the first image is an image, shot by the user, of a frame before the current frame in the video stream.

8. The image processing method of claim 7, wherein the association comprises at least one of the following relations between the image of the current frame and the first image: an optical flow, a mapping matrix, and a position and angle transformation relation.

9. The image processing method of claim 7, further comprising uploading the association to a server (12) after the association between the image of the current frame and the first image is obtained.

10. The image processing method of claim 1, wherein the predetermined classification model (112, 1121, 1122) and the target detection and segmentation model comprise a shared convolutional neural network for use in the mobile device (11).

11. A computing device, comprising a memory and a processor, wherein executable codes are stored in the memory, and when the processor executes the executable codes, the method of any one of the preceding claims is implemented.

## Patentansprüche

1. Bildverarbeitungsverfahren, das von einer mobilen Vorrichtung (11) durchgeführt wird, die eine Kamera (111) umfasst, wobei das Verfahren umfasst:
Erfassen (202) eines Videostreams eines Unfallfahrzeugs durch die Kamera (111) gemäß einem Benutzerbefehl;
Erhalten (204) eines Bilds eines aktuellen Frames im Videostream;
Bestimmen (206), ob das Bild ein erstes vorbestimmtes Kriterium erfüllt, durch Eingeben des Bilds in ein vorbestimmtes Klassifizierungsmodell (112, 1121, 1122), wobei das vorbestimmte Klassifizierungsmodell ein faltendes neuronales Netzwerk (Convolutional Neural Network) zur Verwendung in der mobilen Vorrichtung (11) umfasst und wobei das vorbestimmte Klassifizierungsmodell das Bild basierend darauf klassifiziert, ob das Bild unscharf ist und/oder ob eine Lichtintensität ausreichend ist;
Hinzufügen (208) einer Zielbox und/oder von Zielsegmentierungsinformationen zum Bild durch Eingeben des Bilds in ein Zieldetektions- und -segmentierungsmodell (112, 1121, 1122), wenn das Bild das erste vorbestimmte Kriterium erfüllt, wobei die Zielbox und die Zielsegmentierungsinformationen beide einem Fahrzeugschaden des Fahrzeugs entsprechen und das Zieldetektions- und -segmentierungsmodell ein faltendes neuronales Netzwerk zur Verwendung in der mobilen Vorrichtung (11) umfasst;
Anzeigen (210) der Zielbox und/oder der Zielsegmentierungsinformationen für den Benutzer; und
entsprechendes Auffordern des Benutzers basierend darauf, ob das Ergebnis des Zieldetektions- und -segmentierungsmodells mit einem zweiten vorbestimmten Kriterium übereinstimmt.

2. Bildverarbeitungsverfahren nach Anspruch 1, ferner umfassend: entsprechendes Auffordern des Benutzers basierend auf einem Klassifizierungsergebnis des Modells (112, 1121, 1122), wenn das Bild das erste vorbestimmte Kriterium nicht erfüllt.

3. Bildverarbeitungsverfahren nach Anspruch 1, ferner umfassend Präsentieren eines Aufnahmeablaufs für den Benutzer, bevor der Videostream des Unfallfahrzeugs durch die Kamera (111) erfasst wird.

4. Bildverarbeitungsverfahren nach Anspruch 1, wobei das entsprechende Auffordern des Benutzers basierend darauf, ob das Ergebnis des Zieldetektions- und -segmentierungsmodells mit dem zweiten vorbestimmten Kriterium übereinstimmt, ein Auffordern des Benutzers umfasst, sich basierend auf der Zielbox und/oder den Zielsegmentierungsinformationen vorwärts oder rückwärts zu bewegen, wenn das Ergebnis des Zieldetektions- und -segmentierungsmodells nicht mit dem zweiten vorbestimmten Kriterium übereinstimmt.

5. Bildverarbeitungsverfahren nach Anspruch 1, wobei das entsprechende Auffordern des Benutzers basierend darauf, ob das Ergebnis des Zieldetektions- und -segmentierungsmodells mit dem zweiten vorbestimmten Kriterium übereinstimmt, ein Auffordern des Benutzers umfasst, basierend auf der Zielbox und/oder den Zielsegmentierungsinformationen aufzunehmen, um ein Schadensbeurteilungsfoto zu erhalten, das dem Bild des aktuellen Frames entspricht, wenn das Ergebnis des Zieldetektions- und -segmentierungsmodells mit dem zweiten vorbestimmten Kriterium übereinstimmt.

6. Bildverarbeitungsverfahren nach Anspruch 5, ferner umfassend Hochladen des Schadensbeurteilungsfotos auf einen Server (12), nachdem das Schadensbeurteilungsfoto erhalten wurde, das dem Bild des aktuellen Frames entspricht.

7. Bildverarbeitungsverfahren nach Anspruch 5, ferner umfassend Erhalten einer Zuordnung zwischen dem Bild des aktuellen Frames und einem ersten Bild basierend auf dem Videostream, nachdem das Schadensbeurteilungsfoto erhalten wurde, das dem Bild des aktuellen Frames entspricht, wobei das erste Bild ein durch den Benutzer aufgenommenes Bild eines Frames vor dem aktuellen Frame im Videostream ist.

8. Bildverarbeitungsverfahren nach Anspruch 7, wobei die Zuordnung mindestens eine der folgenden Beziehungen zwischen dem Bild des aktuellen Frames und dem ersten Bild umfasst: einen optischen Ablauf, eine Abbildungsmatrix und eine Positions- und Winkeltransformationsbeziehung.

9. Bildverarbeitungsverfahren nach Anspruch 7, ferner umfassend Hochladen der Zuordnung auf einen Server (12), nachdem die Zuordnung zwischen dem Bild des aktuellen Frames und dem ersten Bild erhalten wurde.

10. Bildverarbeitungsverfahren nach Anspruch 1, wobei das vorbestimmte Klassifizierungsmodell (112, 1121, 1122) und das Zieldetektions- und -segmentierungsmodell ein gemeinsam genutztes faltendes neuronales Netzwerk zur Verwendung in der mobilen Vorrichtung (11) umfassen.

11. Rechenvorrichtung, umfassend einen Speicher und einen Prozessor, wobei ausführbare Codes im Speicher gespeichert sind, und wenn der Prozessor die ausführbaren Codes ausführt, das Verfahren nach einem der vorhergehenden Ansprüche implementiert wird.

## Revendications

1. Procédé de traitement d'image, qui est réalisé au niveau d'un dispositif mobile (11) qui comprend une caméra (111), le procédé comprenant :
l'acquisition (202) d'un flux vidéo d'un véhicule accidenté par la caméra (111) selon une instruction d'utilisateur ;
l'obtention (204) d'une image d'une trame actuelle dans le flux vidéo ;
la détermination (206) si l'image satisfait à un premier critère prédéterminé en entrant l'image dans un modèle de classification prédéterminé (112, 1121, 1122), dans lequel le modèle de classification prédéterminé comprend un réseau neuronal convolutif pour une utilisation dans le dispositif mobile (11) et dans lequel le modèle de classification prédéterminé classifie l'image en fonction du fait que l'image est floue et/ou qu'une intensité lumineuse est suffisante ;
l'ajout (208) d'une boîte cible et/ou d'informations de segmentation cible à l'image en entrant l'image dans un modèle de détection et de segmentation cible (112, 1121, 1122) lorsque l'image satisfait au premier critère prédéterminé, dans lequel la boîte cible et les informations de segmentation cible correspondent toutes deux à un dégât de véhicule du véhicule, et le modèle de détection et de segmentation cible comprend un réseau neuronal convolutif pour une utilisation dans le dispositif mobile (11) ;
l'affichage (210) de la boîte cible et/ou des informations de segmentation cible à l'utilisateur ; et
l'incitation de l'utilisateur appropriée en fonction du fait que le résultat du modèle de détection et de segmentation cible est conforme à un second critère prédéterminé.

2. Procédé de traitement d'image selon la revendication 1, comprenant en outre : l'incitation de l'utilisateur appropriée en fonction d'un résultat de classification du modèle (112, 1121, 1122) lorsque l'image ne satisfait pas au premier critère prédéterminé.

3. Procédé de traitement d'image selon la revendication 1, comprenant en outre la présentation d'un flux de prise de vue à l'utilisateur avant que le flux vidéo du véhicule accidenté ne soit acquis par la caméra (111).

4. Procédé de traitement d'image selon la revendication 1, dans lequel l'incitation de l'utilisateur appropriée en fonction du fait que le résultat du modèle de détection et de segmentation cible est conforme au second critère prédéterminé comprend l'incitation de l'utilisateur à se déplacer vers l'avant ou vers l'arrière en fonction de la boîte cible et/ou des informations de segmentation cible lorsque le résultat du modèle de détection et de segmentation cible n'est pas conforme au second critère prédéterminé.

5. Procédé de traitement d'image selon la revendication 1, dans lequel l'incitation de l'utilisateur appropriée en fonction du fait que le résultat du modèle de détection et de segmentation cible est conforme au second critère prédéterminé comprend l'incitation de l'utilisateur à effectuer une prise de vue en fonction de la boîte cible et/ou des informations de segmentation cible pour obtenir une photo d'évaluation de dégât correspondant à l'image de la trame actuelle lorsque le résultat du modèle de détection et de segmentation cible est conforme au second critère prédéterminé.

6. Procédé de traitement d'image selon la revendication 5, comprenant en outre le téléchargement de la photo d'évaluation de dégât sur un serveur (12) après que la photo d'évaluation de dégât correspondant à l'image de la trame actuelle a été obtenue.

7. Procédé de traitement d'image selon la revendication 5, comprenant en outre l'obtention d'une association entre l'image de la trame actuelle et une première image sur la base du flux vidéo après que la photo d'évaluation de dégât correspondant à l'image de la trame actuelle a été obtenue, dans lequel la première image est une image, prise par l'utilisateur, d'une trame avant la trame actuelle dans le flux vidéo.

8. Procédé de traitement d'image selon la revendication 7, dans lequel l'association comprend au moins l'une des relations suivantes entre l'image de la trame actuelle et la première image : un flux optique, une matrice de mappage et une relation de transformation de position et d'angle.

9. Procédé de traitement d'image selon la revendication 7, comprenant en outre le téléchargement de l'association sur un serveur (12) après que l'association entre l'image de la trame actuelle et la première image a été obtenue.

10. Procédé de traitement d'image selon la revendication 1, dans lequel le modèle de classification prédéterminé (112, 1121, 1122) et le modèle de détection et de segmentation cible comprennent un réseau neuronal convolutif partagé pour une utilisation dans le dispositif mobile (11).

11. Dispositif informatique, comprenant une mémoire et un processeur, dans lequel des codes exécutables sont stockés dans la mémoire, et lorsque le processeur exécute les codes exécutables, le procédé selon l'une quelconque des revendications précédentes est mis en oeuvre.
